# EUROPÄISCHE PATENTSCHRIFT

(11) **EP 1 483 434 B1**
(45) Veröffentlichungstag und Bekanntmachung des Hinweises auf die Patenterteilung: **14.11.2007**
(21) Anmeldenummer: 03743797.7
(22) Anmeldetag: 01.02.2003
(51) Int. Cl.: C25D 13/00, B05C 3/10

(54) **ANLAGE ZUM BEHANDELN, INSBESONDERE ZUM KATAPHORETISCHEN TAUCHLACKIEREN, VON GEGENSTÄNDEN, INSBESONDERE VON FAHRZEUGKAROSSERIEN**
PLANT FOR THE TREATMENT, IN PARTICULAR THE CATAPHORETIC DIP COATING OF OBJECTS, IN PARTICULAR OF VEHICLE CHASSIS
INSTALLATION DE TRAITEMENT, EN PARTICULIER DE PEINTURE PAR IMMERSION CATAPHORETIQUE, D'OBJETS, NOTAMMENT DE CARROSSERIES DE VEHICULES

(30) Priorität: 13.03.2002 DE 10211214
(43) Veröffentlichungstag der Anmeldung: 08.12.2004
(73) Patentinhaber: EISENMANN Anlagenbau GmbH & Co. KG, 71032 Böblingen (DE)
(72) Erfinder: WEINAND, Hans-Joachim, 71254 Ditzingen (DE)
(74) Vertreter: Ostertag, Ulrich
(86) Internationale Anmeldenummer: PCT/EP2003/001006
(87) Internationale Veröffentlichungsnummer: WO 2003/076696

(56) Entgegenhaltungen:
- DE-A- 19 957 607
- DE-U- 20 105 676
- US-A- 6 165 283
- US-B1- 6 173 810

## Beschreibung

Die Erfindung betrifft eine Anlage zum Behandeln, insbesondere zum kataphoretischen Tauchlackieren, von Gegenständen, insbesondere von Fahrzeugkarosserien, gemäß dem Oberbegriff von Anspruch 1.

Das Lackieren von Gegenständen und insbesondere das Lackieren von Fahrzeugkarosserien ist ein komplexer Vorgang, der eine Vielzahl von Behandlungsvorgängen einschließt. Zu diesen Behandlungsvorgängen gehören neben dem eigentlichen Lackiervorgang insbesondere auch Vorbehandlungsprozesse, in denen die Gegenstände vorbereitet werden. Dies sind insbesondere Reinigungsprozesse, jedoch auch physikochemische Vorbereitungsprozesse wie Phosphatieren, Passivieren, Aktivieren einschließlich der zugeordneten Spülvorgänge. All diese Behandlungen finden jeweils an Behandlungsstationen, insbesondere auch in Behandlungsbehältern statt, durch welche die zu behandelnden Gegenstände mit Hilfe einer Fördereinrichtung hindurch bewegt werden.

Im Laufe des Betriebs der Anlage verschmutzen die Behandlungsstationen und die diesen benachbarten Einrichtungen und müssen gereinigt werden. Dies gilt insbesondere für Behandlungsbehälter, in denen die Gegenstände mit einer Flüssigkeit beaufschlagt werden und in denen sich häufig Schlämme ablagern. In gewissen Zeitabständen musste bisher Reinigungspersonal in die Behandlungsbehälter einsteigen und dort die Schlämme manuell entsorgen, was eine außerordentlich aufwendige und mühsame Tätigkeit darstellte.

Aufgabe der vorliegenden Erfindung ist es, eine Anlage der eingangs genannten Art derart auszugestalten, daß Reinigungs- und Wartungsarbeiten leichter durchgeführt werden können.

Diese Aufgabe wird erfindungsgemäß dadurch gelöst, daß
d) an der Halterung ein Servicekorb zur Beförderung mindestens einer Person befestigbar ist;
e) eine Einrichtung vorgesehen ist, mit welcher der Servicekorb bei einer Schwenkbewegung des Schwenkarms in vertikaler Ausrichtung gehalten wird.

Erfindungsgemäß wird als Fördereinrichtung ein Transportwagen eingesetzt, wie dieser an und für sich aus der DE-U-201 05 676 bekannt ist. Dort wird dieser Transportwagen allerdings nur zum Ein- und Austauschen eines Gegenstandes in ein Behandlungsbad bzw. aus diesem verwendet. Mit der vorliegenden Erfindung wird erkannt, daß die Kinematik, welche der bekannte Transportwagen für die von ihm transportierten Gegenstände bereitstellt, sich auch für einen anderen Zweck einsetzen lässt: Wird nämlich an der Halterung, die normalerweise die zu behandelnden Gegenstände trägt, ein Servicekorb für Bedienpersonal befestigt, so kann dieser Servicekorb an jede gewünschte Stelle innerhalb der Anlage gefahren werden, die einer Reinigung oder Wartung bedarf. Es muß nur dafür gesorgt werden, daß die Halterung, die den Servicekorb trägt, bei der Schwenkbewegung des Schwenkarmes horizontal bleibt bzw., was damit gleich bedeutend ist, der Servicekorb insgesamt stets in vertikaler Ausrichtung bleibt.

Sind also in der Anlage, insbesondere in dem Behandlungsbehälter, Reinigungs- oder Wartungsarbeiten nötig, so kann das Bedienpersonal mit Hilfe des Transportwagens direkt an die Stellen herangefahren werden, an denen die Wartungsarbeiten durchgeführt werden sollen. Dadurch werden diese Arbeiten ganz erheblich erleichtert. Auch das Herausbefördern von Schlämmen oder dgl. aus Behandlungsbehältern kann mit Unterstützung des Transportwagens in sehr viel einfacherer Weise erfolgen als dies beim Stande der Technik der Fall war.

Theoretisch ist es durchaus möglich, die unabhängigen Antriebe für den Schwenkarm und für die Halterung, an dem sich der Servicekorb befindet, elektronisch so anzusteuern, daß der Servicekorb stets die gewünschte vertikale Ausrichtung behält. Aus Sicherheitsgründen werden jedoch Ausgestaltungen bevorzugt, bei welchen die Antriebsverbindung zwischen der Halterung und dem unabhängigen Antrieb für die Halterung lösbar ist. Dadurch wird erreicht, daß die Halterung und damit der Servicekorb frei um die Achse verschwenken kann, die ihn mit dem äußeren Ende des Schwenkarmes verbindet. Nun kann durch entsprechende Maßnahmen auf nicht elektronischem Wege Sorge dafür getragen werden, daß die Halterung bei einer Verschwenkung des Schwenkarmes stets so gehalten wird, daß sie ihre vertikale Ausrichtung beibehält.

Beispielsweise kann hierfür eine mechanische Führungseinrichtung vorgesehen sein.

Ein erstes Ausführungsbeispiel für eine derartige Führungseinrichtung zeichnet sich dadurch aus, daß diese umfasst:
a) eine starr befestigte, horizontal verlaufende Führungsschiene;
b) einen an der Führungsschiene verschiebbaren Führungsschlitten;
c) eine an dem Führungsschlitten festgelegte und mit dem Servicekorb verbundene Vertikalführung, die so gestaltet ist, daß sie Vertikalbewegungen des Servicekobs zulässt.

Bei dieser Ausführungsform wird also mit der horizontal verlaufenden Führungsschiene auf Führungselemente zurückgegriffen, die außerhalb des Transportwagens selbst liegen und entlang des Verfahrwegs des Transportwagens vorgesehen sein müssen. Der an der Führungsschiene verschiebbare Führungsschlitten macht die Horizontalkomponente der Bewegung des Servicekorbes mit, während die Vertikalführung die Vertikalbewegungskomponente des Servicekorbes aufnimmt und für dessen senkrechte Ausrichtung sorgt.

Die Vertikalführung kann eine Teleskopführung sein, die sich bei der Schwenkbewegung des Schwenkarmes und der damit verbundenen Aufwärts- bzw. Abwärtsbewegung des Servicekorbes längt oder verkürzt.

Alternativ kann die Vertikalführung auch einfach eine Führungsstange umfassen, die sich durch den Führungsschlitten hindurch erstreckt und in diesem linear geführt ist.

Praktisch gleichwertig zu dieser Ausführungsform ist diejenige, bei der die Vertikalführung eine Führungsstange umfasst, die sich durch das Element, welches die Verbindung zu dem Servicekorb herstellt, hindurch erstreckt und in diesem linear geführt ist.

Außerhalb des eigentlichen Transportwagens liegende Führungselemente werden bei derjenigen Ausführungsform der Erfindung nicht benötigt, bei welcher die Führungseinrichtung eine Verbindungsstange umfasst, die am einen Ende an dem Servicekorb und am anderen Ende an einer Struktur angelenkt ist, die mit dem Fahrwerk des Transportwagens starr verbunden ist, derart, daß die Verbindungsstange mit dem Schwenkarm eine Parallelogrammführung bildet. Wird also der Schwenkarm mit Hilfe des diesem zugeordneten Antriebs verschwenkt, so sorgt die durch die Verbindungsstange gebildete Parallelogrammführung dafür, daß die Ausrichtung des Servicekorbes erhalten bleibt.

Einen noch anderen Weg bei der Aufrechterhaltung der Orientierung des Servicekorbes beschreitet diejenige Ausführungsform der Erfindung, bei welcher ein Getriebe vorgesehen ist, welches bei montiertem Servicekorb eine Zwangskopplung zwischen der Schwenkbewegung des Schwenkarmes und der Schwenkbewegung der den Servicekorb tragenden Halterung herstellt, derart daß der Servicekorb bei einer Schwenkbewegung des Schwenkarms vertikal ausgerichtet bleibt. Bei dieser Ausführungsform wird zunächst das Getriebe, welches für die normale, unabhängige Schwenkbewegung der Halterung um das freie Ende des Schwenkarmes zuständig ist, ganz oder teilweise ausgebaut und duch ein anderes Getriebe ersetzt, welches eine Zwangskopplung zu demjenigen Antrieb herstellt, der den Schwenkarm verschwenkt. Auch auf diese Weise kann rein mechanisch und daher mit großer Fehlersicherheit die gewünschte Ausrichtung des Servicekorbes garantiert werden.

Im mechanischen Aufbau besonders einfach ist diejenige Ausführungsform der Erfindung, bei welcher der Schwenkarm am oberhalb des Schwerpunktes des Servicekorbs liegenden Bereich des Servicekorbs angelenkt ist und der Servicekorb an dem Schwenkarm pendelnd aufgehängt ist. Es bedarf in diesem Falle keinerlei besonderer Maßnahmen, um die senkrechte Ausrichtung des Servicekorbs zu gewährleisten, da diese sich automatisch unter dem Einfluß der Schwerkraft einstellt.

Dabei empfiehlt sich allerdings, daß Dämpfungs- oder Reibungsglieder vorgesehen sind, welche die Pendelbewegung des Servicekorbes dämpfen.

Ein Ausführungsbeispiel der Erfindung wir nachfolgend anhand der Zeichnung näher erläutert; es zeigen
- Figur 1:: eine Seitenansicht eines Transportwagens, der in der Lackieranlage verwendet wird, mit einer hieran befestigten Fahrzeugkarosserie in normaler Transportposition;
- Figur 2:: eine Seitenansicht des Transportwagens ähnlich der Figur 1, in welcher die Fahrzeugkarosserie jedoch aus der Transportposition verschwenkt ist;
- Figur 3:: die Draufsicht auf den Transportwagen von Figur 2;
- Figur 4:: eine perspektivische Ansicht des Transportwagens samt Fahrzeugkarosserie von Figur 1;
- Figur 5:: einen Schnitt durch Figur 3 gemäß der dortigen Linie VIII-VIII;
- Figuren 6 und 7:: vergrößerte Detailansichten des Transportwagens im Bereich der auf Laufflächen aufstehenden Räder;
- Figur 8:: in sehr schematischer Weise einen Transportwagen über einem Tauchbecken mit einem Servicekorb, der durch eine erste Ausführungsform einer Führungseinrichtung ständig in vertikaler Ausrichtung gehalten wird;
- Figur 9:: eine Ansicht ähnlich der Figur 8, in der jedoch eine zweite Ausführungsform einer Führungseinrichtung für den Servicekorb eingesetzt ist.

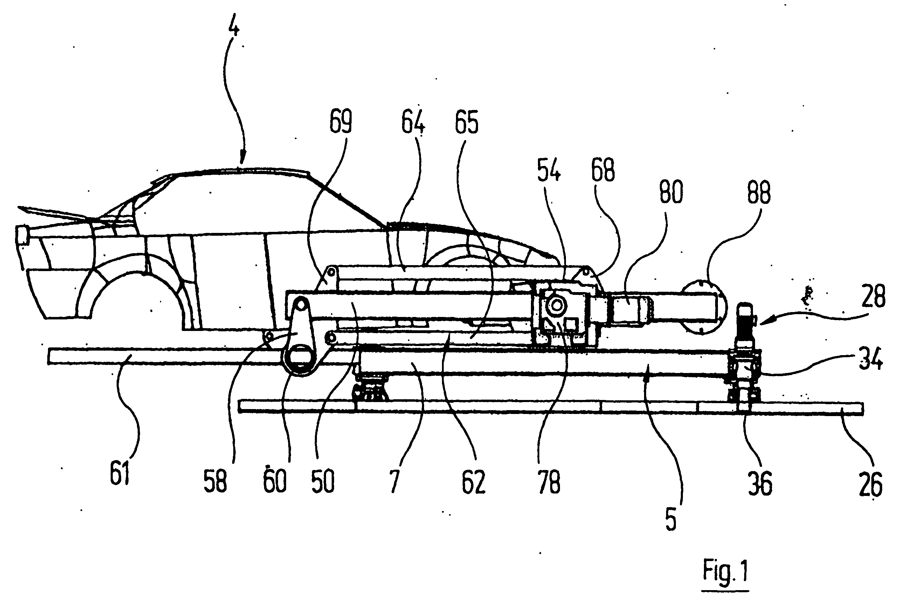

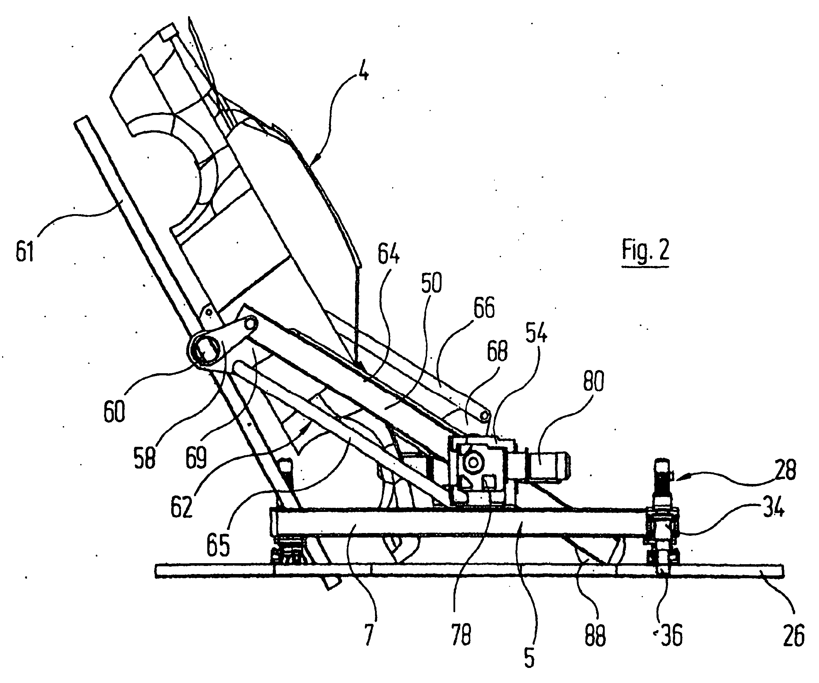

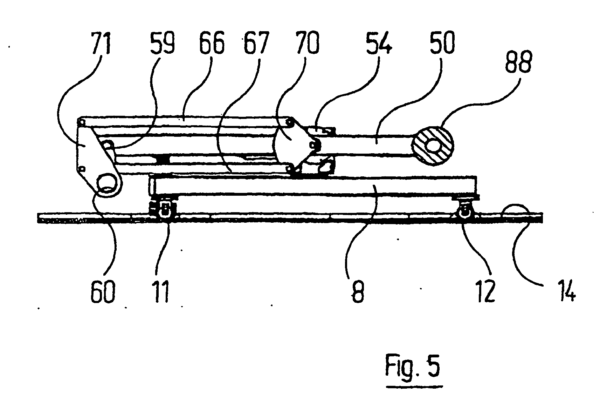

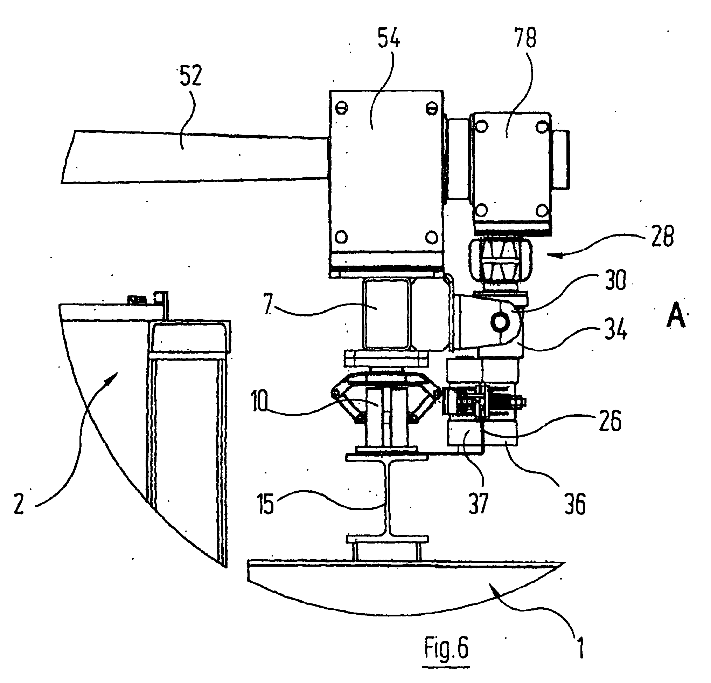

Nachfolgend wird zunächst anhand der Figuren 1 bis 7 die Bauweise von Transportwagen 5 näher beschrieben, wie sie in der in den weiteren Figuren dargestellten Lackieranlage zum Einsatz kommen. Derartige Transportwagen 5 sind zwar grundsätzlich aus der DE-U-201 05 676 bekannt, auf die ergänzend Bezug genommen wird. Die Kenntnis der Bewegungskinematik dieser Transportwagen 5 erschließt aber erst das Verständnis der Gesamtanlage, weswegen die Erläuterung der Transportwagen 5 in der vorliegenden Beschreibung, soweit erforderlich, wiederholt wird.

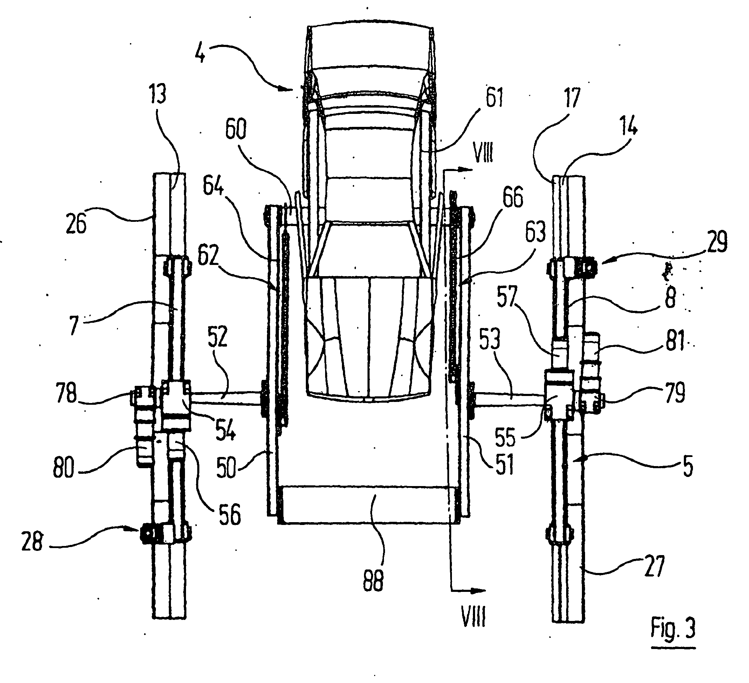

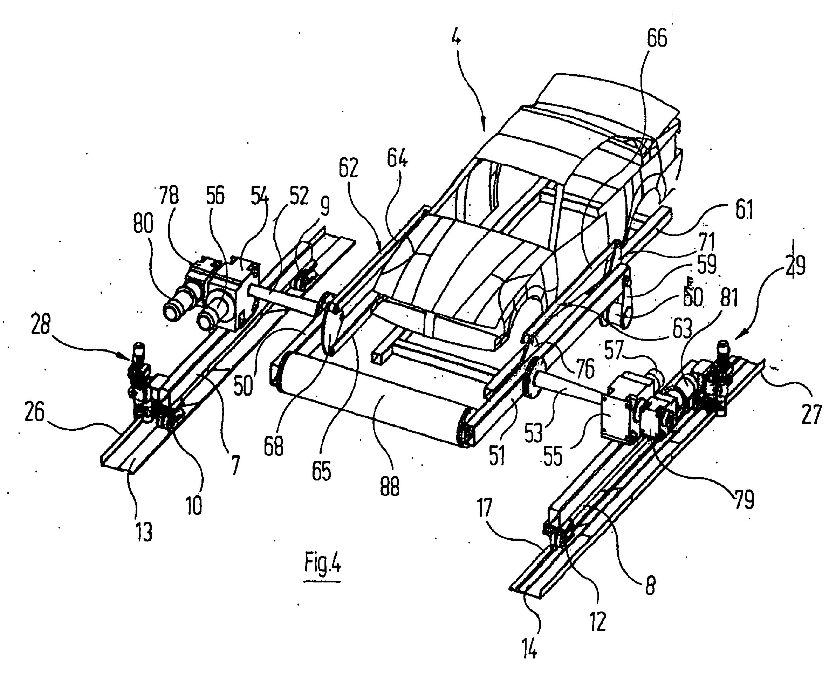

Wie insbesondere die Figuren 3 und 4 zeigen, besitzt jeder Transportwagen 5 zwei Längstraversen 7, 8, an deren Unterseite jeweils zwei Doppelräder 9, 10 bzw. 11, 12 um eine horizontale Achse drehbar gelagert sind. Zusätzlich sind die Räder 9 bis 12 jeweils mit Hilfe eines in Einzelnen nicht dargestellten Drehschemels um eine vertikale Achse verdrehbar, so daß die Ausrichtung der Doppelräder 9 bis 12 gegenüber den jeweiligen Längstraversen 7, 8 verändert werden kann.

Die Doppelräder 9, 10 rollen auf einer ersten Lauffläche 13 und die Doppelräder 11, 12 auf einer hierzu parallen zweiten Lauffläche 14 ab. Die Laufflächen 13, 14 sind ihrerseits auf jeweils einem I-Profilträger 15, 16 montiert, der von einem nicht dargestellten Stahlbau getragen wird.

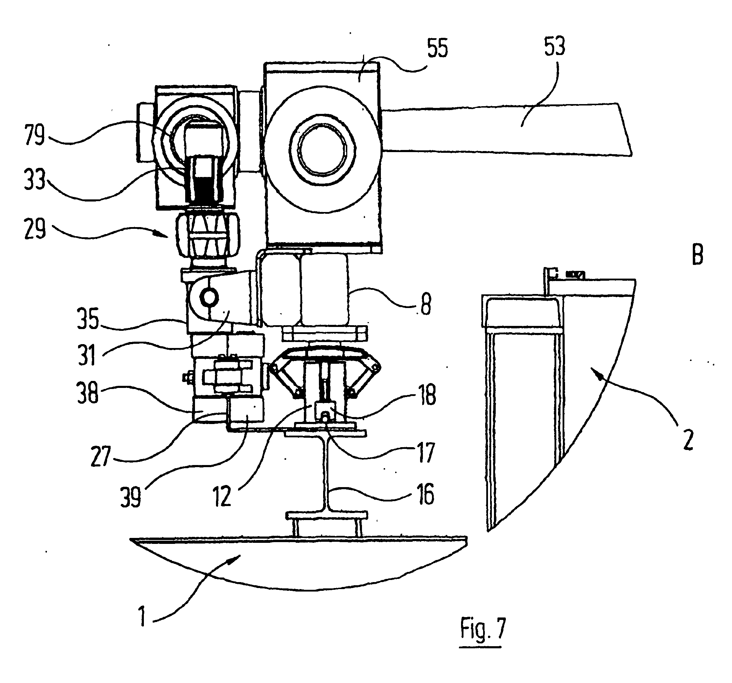

In der Mitte der in den Figuren 3 und 4 rechten, zweiten Lauffläche 14 ist eine Führungsrippe 17 angebracht, die von eine komplementäre Ausnehmung aufweisenden Führungsgliedern 18 (vgl. Figur 7) übergriffen wird. Jeweils ein Führungsglied 18 ist mit dem Drehschemel eines zugeordneten Doppelrads 11 bzw. 12 so verbunden, daß es dieses Doppelrad 11 bzw. 12 entsprechend dem Verlauf der Führungsrippe 17 um die vertikale Achse verdreht. Auf diese Weise folgen die Doppelräder 11, 12 der Lauffläche 14. Die der ersten, in den Figuren 3 und 4 linken Lauffläche 13 zugeordneten Doppelräder 9, 10 dagegen sind als reine Nachlaufräder konzipiert; das heißt, es sind keine gesonderten Führungsmittel zur Beeinflussung der Winkellage der Räder um deren vertikale Drehachse vorgesehen. Auf diese Weise können die Genauigkeitsanforderungen an die Führungsmittel, mit denen die Transportwagen 5 auf den Laufflächen 13, 14 gehalten werden, gering gehalten werden.

Auf den Transportwagen 5 werden Fahrzeugkarosserien 4 mit Hilfe einer Eintauchvorrichtung getragen, die beidseits der Fahrzeugkarosserien 4 jeweils eine Schwenkvorrichtung umfaßt. Jede dieser Schwenkvorrichtungen besitzt einen Schwenkarm 50, 51, der sich in noch zu beschreibender Weise in einer vertikalen Ebene, die parallel zur Förderrichtung verläuft, verschwenken kann. Hierzu ist jeder Schwenkarm 50, 51 über eine Stummelwelle 52, 53, die senkrecht zur Förderrichtung verläuft, mit der Ausgangswelle eines Getriebes 54, 55 verbunden. Das Getriebe 54, 55 ist an der jeweiligen Längstraverse 7, 8 des Transportwagens 5 etwa in deren mittlerem Bereich befestigt. Es wird von einem Motor 56 bzw. 57 angetrieben, der seitlich an das Getriebe 54, 55 angeflanscht ist.

Die in Bewegungsrichtung hinteren Enden der Schwenkarme 50, 51 sind gelenkig mit einer Lasche 58, 59 verbunden, die sich in der normalen, in Figur 1 dargestellten Transportposition senkrecht vom entsprechenden Schwenkarm 50, 51 nach unten erstreckt. Die unteren Enden der Laschen 58, 59 sind über eine senkrecht zur Bewegungsrichtung verlaufende Quertraverse 60 miteinander verbunden, die ihrerseits starr mit dem mittleren Bereich einer Tragplattform 61 für die Fahrzeugkarosserie 4 in Verbindung steht. Die Erstreckungsrichtung der beiden Laschen 58, 59 verläuft dabei senkrecht zur Ebene der Tragplattform 61.

Die Winkelstellung, welche die Laschen 58, 59 gegenüber den Schwenkarmen 50, 51 einnehmen, wird jeweils durch eine Verstelleinrichtung bestimmt, die insgesamt das Bezugszeichen 62 bzw. 63 trägt. Jede dieser Verstelleinrichtungen 62, 63 umfaßt ein Gestänge mit zwei parallelen Schubstangen 64, 65 bzw. 66, 67, die an ihren gegenüberliegenden Enden jeweils über eine Verbindungslasche 68, 69 bzw. 70, 71 miteinander verbunden sind. Die in Bewegungsrichtung hinteren Verbindungslaschen 69 bzw. 71 sind an ihrem unteren Ende starr an der Quertraverse 60 festgemacht.

Die in Bewegungsrichtung vorne liegende Verbindungslaschen 70, 71 dagegen sind starr jeweils mit einer Stummelwelle verbunden, die in der Zeichnung nicht erkennbar ist, da sie sich koaxial durch die zugeordnete, als Hohlwelle ausgebildete Stummelwelle 52, 53 hindurcherstreckt. Diese weiteren Stummelwellen verlaufen auch durch die Getriebe 54, 55 hindurch und sind an die Ausgangswellen weiterer Getriebe 78, 79 angekoppelt, die seitlich an den Getrieben 54, 55 befestigt sind. Auch an die Getriebe 78, 79 sind Antriebsmotoren 80, 81 angeflanscht.

Die vorderen Enden der beiden Schwenkarme 50, 51 tragen gemeinsam ein Gegengewicht 88, so daß die auf die Stummelwellen 52, 53 wirkenden Drehmomente annähernd bei aufgesetzter Fahrzeugkarosserie 4 ausbalanciert sind.

Die Doppelräder 19 bis 12 der Transportwagen 5 sind selbst nicht angetrieben. Der Vorwärtstrieb der Transportwagen 5 erfolgt vielmehr über einen gesonderten Antrieb, der nachfolgend anhand der Figuren 3 bis 7 näher erläutert wird.

Parallel zu den beiden Laufflächen 13, 14 erstrecken sich zwei senkrecht ausgerichtete, stationäre Antriebsflansche 26, 27. Diese wirken jeweils mit einem Preßrollenantrieb 28 bzw. 29 zusammen, der an der Seitenfläche der benachbarten Längstraverse 7, 8 mittels einer Lasche 30 bzw. 31 befestigt ist. Die Preßrollenantriebe 28, 29 umfassen jeweils einen elektrischen Antriebsmotor 32, 33 und ein Antriebsgetriebe 34, 35. Letzteres treibt die parallelen, vertikalen Achsen zweier Preßrollen 36, 37 bzw. 38, 39 an, die von beiden Seiten her gegen den jeweils zugeordneten Antriebsflansch 26 bzw. 27 angepreßt werden. Werden die Antriebsmotoren 32, 33 bestromt, laufen die Preßrollen 36, 37 bzw. 38, 39 auf den jeweiligen Seitenflächen der Antriebsflansche 26, 27 ab und bewegen dabei den Transportwagen 5 auf den Laufflächen 13, 14 vorwärts.

Jeder Transportwagen 5 umfaßt seine eigene Wagensteuerung, unter deren Regime er sowohl seine Translationsbewegung entlang der Laufflächen 13, 14 als auch die Schwenkbewegungen der der Schwenkarme 50, 51 und der Tragplattform 61 ausführt.

Zusammenfassend lassen sich die Bewegungsmöglichkeiten einer auf einem Transportwagen 5 getragenen Fahrzeugkarosserie 4 wie folgt beschreiben:

Die Gesamtbewegung ergibt sich aus einer Überlagerung der linearen Translationsbewegung des Transportwagens 5, einer ersten Schwenkbewegung, welche die Schwenkarme 50, 51 gegenüber den Längstraversen 7, 8 ausführen und die mit einem Anheben bzw. Absenken der Fahrzeugkarosserie 4 verbunden ist, und einer zweiten Schwenkbewegung, welche die auf der Tragplattform 61 befindliche Fahrzeugkarosserie 4 gegenüber den Schwenkarmen 50, 51 ausführt. All diese Bewegungsarten können vollständig unabhängig voneinander durchgeführt werden, was zu praktisch beliebigen Bewegungskinematiken der Fahrzeugkarosserie 4 führt. Beim oben beschriebenen Ausführungsbeispiel eines Transportwagens 5 wird die Schwenkbewegung auf die Tragplattform 61 von den Motoren 80, 81 durch gestängeartige Verstelleinrichtungen 62, 63 übertragen. Selbstverständlich können die Verstelleinrichtungen aber auch anders ausgestaltet sein, beispielsweise endlose Metallbänder als Drehmomentübertragende Elemente enthalten.

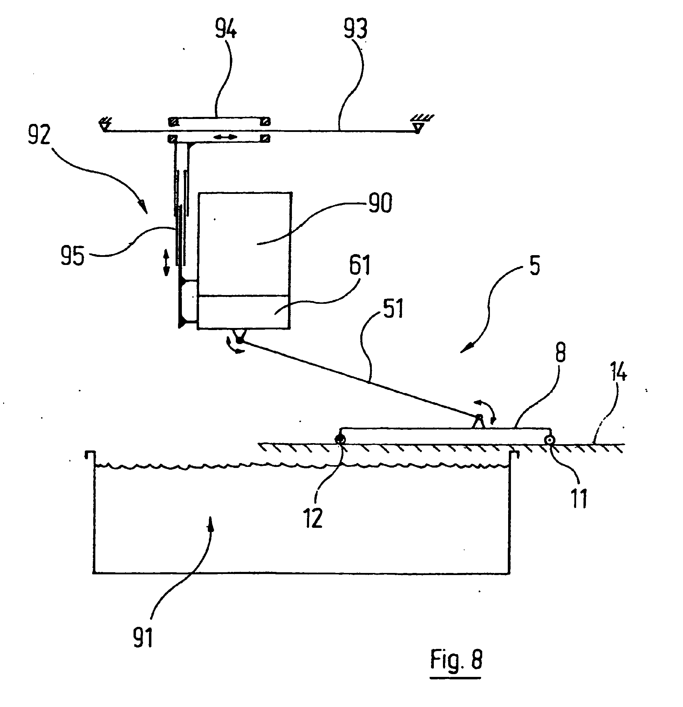

In Figur 8 ist der oben anhand der Figuren 1 bis 7 der Transportwagen 5 in äußerst schematischer Weise dargestellt, um die Verhältnisse übersichtlich zu gestalten. Wieder zu erkennen in Figur 8 sind die Längstraverse 8 mit den Doppelrädern 11, 12 und der Schwenkarm 51, an dessen Ende die als Halterung dienende Tragplattform 61 verschwenkbar angelenkt ist. Die Tragplattform 61 trägt in Figur 8 statt einer Fahrzeugkarosserie 4 wie in den Figuren 1 bis 7 einen Servicekorb 90, in welchen einen oder mehrere Pesonen einsteigen und von dem aus diese Personen Wartungsarbeiten ausführen können.

Der Transportwagen 5 ist auf den Laufflächen 13, 14, won denen in Figur 8 nur die vordere Lauffläche 14 erkennbar ist und die sich beidseits eines Tauchbeckens 91 erstrecken, verfahrbar.

Damit der Servicekorb 90 bei der Verschwenkung des Schwenkarmes 51 stets in vertikaler Richtung ausgerichtet bleibt, ist eine insgesamt mit dem Bezugszeichen 92 versehene Führungseinrichtung vorgesehen. Die Führungseinrichtung 92 umfasst eine ortsfeste, beispielsweise an einem Stahlbau befestigte, horizontale Führungsschiene 93, auf der ein Führungsschlitten 94 horizontal verschiebbar geführt ist. Am Führungsschlitten 94 seinerseits ist eine vertikal verlaufende Teleskopführung 95 befestigt, die ihrerseits an der Tragplattform 61 bzw. dem Servicekorb 90 festgelegt ist.

Die Führungseinrichtung 92 funktioniert wie folgt:

Beim Montieren des Servicekorbs 90 auf der Tragplattform 61 wird zunächst die Antriebsverbindung zwischen der Schwenkachse, um welche die Tragplattform 61 gegenüber dem Schwenkarm 51 verschwenken kann, und dem zugehörigen Schwenkantrieb gelöst, so daß sich also die Tragplattform 61 frei um die fragliche Schwenkachse verschwenken kann.

Nun sei angenommen, daß der Schwenkarm 51 zum Anheben des Servicekorbes 90 in Figur 8 im Uhrzeigersinn verschwenkt werden soll. Die vertikale Ausrichtung des Servicekorbes 90 wird dabei durch die Teleskopführung 95 aufrecht erhalten, die sich bei der Aufwärtsbewegung des Servicekorbes 90 verkürzt. Gleichzeitig erfährt der Servicekorb 90 in Figur 8 eine Bewegungskomponente nach rechts, die von einer entsprechenden Linearverschiebung des Führungsschlittens 94 auf der Führungsstange 93 nach rechts begleitet wird.

Soll der Servicekorb 90 abgesenkt werden, beispielsweise um in das Tauchbad 91 einzutauchen, laufen die geschilderten Bewegungsvorgänge in umgekehrter Richtung ab: Der Schwenkarm 51 verschwenkt sich in Figur 8 gegen den Uhrzeigersinn. Die Teleskopführung 95 längt sich bei der Bewegung des Servicekorbes 90 nach unten. So lange die Schwenkbewegung des Schwenkarmes 51 mit einer Horizontalbewegungskomponente des Servicekorbes 90 nach links verbunden ist, verfährt der Führungsschlitten 94 entsprechend auf der Führungsstange 93 nach links.

Es ist ersichtlich, daß auf die geschilderte Weise der Servicekorb 90 mit Hilfe des Transportwagens 5 in jede gewünschte Position oberhalb aber auch innerhalb des - in diesem Falle abgelassenen - Tauchbeckens 91 gebracht werden kann. Das Bedienpersonal kann also vom Servicekorb 90 aus alle Gegenstände und Flächen erreichen, beispielsweise um Wartungs- oder Reinigungsarbeiten durchzuführen. Sind diese abgeschlossen, wird der Servicekorb 90 von der Tragplattform 61 wieder abgenommen; die Antriebsverbindung zwischen der Schwenkachse der Tragplattform 61 und dem entsprechenden Antriebsmotor wird wieder hergestellt, so daß der "konventionelle" Betrieb der Anlage wieder aufgenommen werden kann.

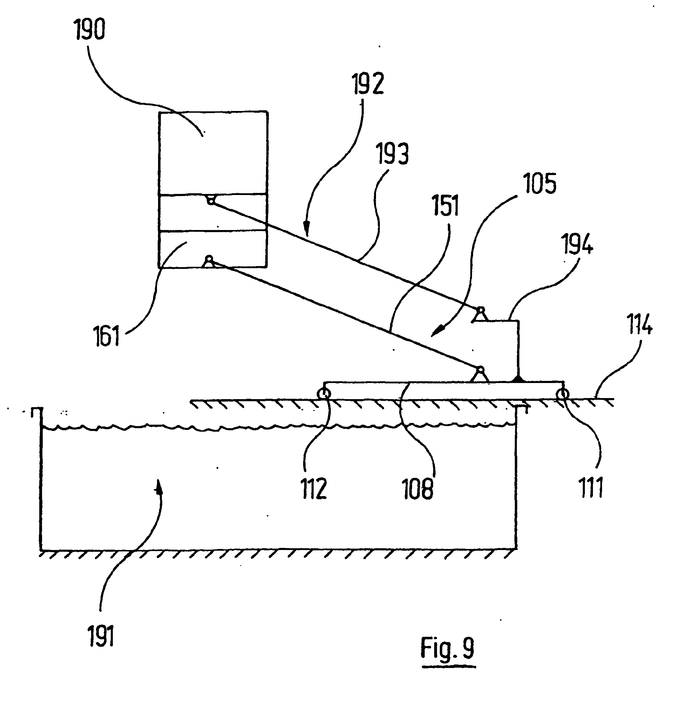

Figur 9 zeigt eine Anordnung, die in funktionaler Hinsicht derjenigen von Figur 8 weitestgehend entspricht. Entsprechende Teile sind daher mit dem selben Bezugszeichen zuzüglich 100 gekennzeichnet. Erneut befindet sich ein Transportwagen 105 auf Laufflächen 113, 114, auf denen er mit Doppelrädern 111, 112 abrollt. Die Laufflächen 113, 114 erstrecken sich parallel zu einem Tauchbad 191. In Figur 9 ist ferner ein Schwenkarm 151 des Transportwagens 105 erkennbar, der an seinem äußeren Ende gelenkig mit einer Tragplattform 161 verbunden ist. Auf der Tragplattform 161 ist ein Servicekorb 190 montiert.

Auch der Servicekorb 190 wird durch eine Führungseinrichtung in ständig vertikaler Ausrichtung gehalten, die das Bezugszeichen 192 trägt. In Figur 9 umfasst diese Führungseinrichtung 192 mindestens einen Verbindungsstab 193, der parallel zum Schwenkarm 151 geführt ist und an seinem äußeren Ende vertikal oberhalb des Schwenkarmes 151 an dem Servicekorb 190 angelenkt, an seinem gegenüberliegenden Ende vertikal oberhalb des Schwenkarmes 151 an einer starr mit den Längstraversen des Transportwagens 105 verbundenen Struktur 194 angelenkt ist (in Figur 9 ist nur die Längstraverse 108 erkennbar). Der Verbindungsstab 193 bildet auf diese Weise zusammen mit dem Schwenkarm 151 eine Parallelogrammführung.

Die beschriebene Führungseinrichtung 192 funktioniert wie folgt:

Ähnlich wie bei dem in Figur 8 beschriebenen Ausführungsbeispiel wird beim Montieren des Servicekorbes 190 auf der Tragplattform 161 die Antriebsverbindung zwischen der die Tragplattform 161 an den Schwenkarmen 151 anlenkenden Schwenkachse und dem zugehörigen Schwenkantrieb unterbrochen, so daß sich die Tragplattform 161 frei gegenüber dem Schwenkarm 151 verdrehen kann. Wird nunmehr der Schwenkarm 151 zum Anheben oder Absenken des Servicekorbes 190 verschwenkt, so sorgt der Verbindungsstab 193 stets für dessen senkrechte Ausrichtung.

Ersichtlich kann der Servicekorb 190 des in Figur 9 dargestellten Ausführungsbeispieles in derselben Weise wie der Servicekorb 90 des Ausführungsbeispieles der Figur 8 zu Wartungs- und Reinigungsarbeiten im gesamten Bereich eingesetzt werden, der dem Servicekorb 190 zugänglich ist.

Bei einem weiteren, in der Zeichnung nicht dargestellten Ausführungsbeispiel wird die ständige vertikale Ausrichtung des Servicekorbes nicht durch eine externe Führungseinrichtung bewirkt, sondern durch ein Getriebe, welches den Schwenkantrieb für den Schwenkarm in einem Übersetzungsverhältnis mit der die Tragplattform verdrehenden Schwenkachse verbindet, das umgekehrt zu dem Übersetzungsverhältnis steht, mit dem dieser Antrieb den Schwenkarm selbst verschwenkt. Selbstverständlich wird auch bei diesem Ausführungsbeispiel die selbständige, normale Antriebsverbindung zwischen der Schwenkachse der Tragplattform und dem zugehörigen Schwenkantrieb unterbrochen. Bei der geschilderten Zwangskopplung der Schwenkbewegung des Schwenkarmes und der Tragplattform wird ersichtlich erreicht, daß die Tragplattform stets waagerecht, der Förderkorb also stets senkrecht ausgerichtet bleibt.

Schließlich ist es auch möglich, den Servicekorb in einem oberhalb des Schwerpunktes liegenden Bereich gelenkig an dem Schwenkarm des Transportwagens zu befestigen, so daß er pendelnd an dem Schwenkarm hängt und unter dem Einfluß der Schwerkraft selbstätig die vertikale Ausrichtung aufsucht. Ein übermäßiges Pendeln kann dabei durch geeignete Reibungs- oder Dämpfungsglieder unterdrückt werden.

## Patentansprüche

1. Anlage zum Behandeln, insbesondere zum kataphoretischen Tauchlackieren, von Gegenständen, insbesondere von Fahrzeugkarosserien, mit
a) mehreren Behandlungsstationen, von denen mindestens eine einen Behandlungsbehälter umfasst und an denen die Gegenstände einer Behandlung unterzogen werden;
b) einer Fördereinrichtung, mit welcher die Gegenstände durch die verschiedenen Behandlungsstationen geführt und dabei in den mindestens einen Behandlungsbehälter eingebracht und aus diesem ausgebracht werden, wobei
c) die Fördereinrichtung mindestens einen Transportwagen (5) umfasst, der seinerseits aufweist:
ca) ein entlang des Bewegungsweges der Gegenstände (4) verfahrbares Fahrwerk (7, 8, 9 bis 12);
cb) mindestens einen an dem Fahrwerk (7, 8, 9 bis 12) angelenkten Schwenkarm (50, 51);
cc) eine an dem Schwenkarm (50, 51) angelenkte Halterung (61) für mindestens einen Gegenstand (4) ;
cd) unabhängig voneinander betätigbare Antriebe (32, 33, 56, 57, 80, 81) erstens für die Translationsbewegung, zweitens für die Schwenkbewegung des mindestens einen Schwenkarms (50, 51) und drittens für die Halterung (61) ;
**dadurch gekennzeichnet, daß**
d) an der Halterung (61; 161) ein Servicekorb (90; 190) zur Beförderung mindestens einer Person befestigt ist;
e) eine Einrichtung vorgesehen ist, mit welcher der Servicekorb (90; 190) bei einer Schwenkbewegung des Schwenkarms (50, 51; 150 151) in vertikaler Ausrichtung gehalten wird.

2. Anlage nach Anspruch 1, **dadurch gekennzeichnet, daß** die Antriebsverbindung zwischen der Halterung (61) und dem unabhängigen Antrieb (80, 81) für die Halterung (61) lösbar ist.

3. Anlage nach Anspruch 2, **dadurch gekennzeichnet, daß** eine mechanische Führungseinrichtung (92; 192) vorgesehen ist, welche den Servicekorb (90, 190) in vertikaler Ausrichtung hält.

4. Anlage nach Anspruch 3, **dadurch gekennzeichnet, daß** die mechanische Führungseinrichtung (92) umfasst:
a) eine starr befestigte, horizontal verlaufende Führungsschiene (93);
b) einen an der Führungsschiene (93) verschiebbaren Führungsschlitten (94);
c) eine an dem Führungsschlitten (94) festgelegte und mit dem Servicekorb (90) verbundene Vertikalführung (95), die so gestaltet ist, daß sie Vertikalbewegungen des Servicekorbs (90) zulässt.

5. Anlage nach Anspruch 4, **dadurch gekennzeichnet, daß** die Vertikalführung (95) eine Teleskopführung ist.

6. Anlage nach Anspruch 4, **dadurch gekennzeichnet, daß** die Vertikalführung eine Führungsstange umfasst, die sich durch den Führungsschlitten hindurch erstreckt und in diesem linear geführt ist.

7. Anlage nach Anspruch 4, **dadurch gekennzeichnet, daß** die Vertikalführung eine Führungsstange umfasst, die sich durch das Element, welches die Verbindung zu dem Servicekorb herstellt, hindurch erstreckt und in diesem linear geführt ist.

8. Anlage nach Anspruch 3, **dadurch gekennzeichnet, daß** die Führungseinrichtung (192) eine Verbindungsstange (193) umfasst, die an einem Ende an dem Servicekorb (190) und am anderen Ende an einer Struktur (194) angelenkt ist, die mit dem Fahrwerk (107, 108, 109 bis 112) starr verbunden ist, derart, daß die Verbindungsstange (193) mit dem Schwenkarm (151) eine Parallelogrammführung bildet.

9. Anlage nach Anspruch 2, **dadurch gekennzeichnet, daß** ein Getriebe vorgesehen ist, welches bei montiertem Servicekorb eine Zwangskopplung zwischen der Schwenkbewegung des Schwenkarmes und der Schwenkbewegung der den Servicekorb tragenden Halterung herstellt, derart, daß der Servicekorb bei einer Schwenkbewegung des Schwenkarms vertikal ausgerichtet bleibt.

10. Anlage nach Anspruch 2, **dadurch gekennzeichnet, daß** der Schwenkarm am oberhalb des Schwerpunktes des Servicekorbs liegenden Bereich des Servicekorbs angelenkt ist und der Servicekorb an dem Schwenkarm pendelnd aufgehängt ist.

11. Anlage nach Anspruch 10, **dadurch gekennzeichnet, daß** Dämpfungs- oder Reibungsglieder vorgesehen sind, welche die Pendelbewegung des Servicekorbs dämpfen.

## Claims

1. System for treating, in particular for cataphoretically dip-coating, articles, in particular vehicle bodies, comprising
a) a plurality of treatment stations, of which at least one comprises a treatment container and at which the articles undergo a treatment;
b) a feed device, by means of which the articles are conveyed through the various treatment stations and are in the process introduced into and removed from the at least one treatment container, wherein
c) the feed device comprises at least one feed carriage (5), which in turn comprises:
ca) running gear (7, 8, 9 to 12) movable along the path of motion of the articles (4);
cb) at least one swivel arm (50, 51) coupled to the running gear (7, 8, 9 to 12);
cc) a holding device (61) coupled to the swivel arm (50, 51) for at least one article (4);
cd) mutually independently actuable drives (32, 33, 56, 57, 80, 81) first for the translational movement, second for the swivelling motion of the at least one swivel arm (50, 51) and third for the holding device (61);
**characterized in that**
d) a service cage (90; 190) for carrying at least one person is fastened to the holding device (61; 161);
e) a device is provided, by means of which the service cage (90; 190) upon a swivelling motion of the swivel arm (50, 51; 150, 151) is kept in vertical alignment.

2. System according to claim 1, **characterized in that** the drive connection between the holding device (61) and the independent drive (80, 81) for the holding device (61) is disconnectable.

3. System according to claim 2, **characterized in that** a mechanical guide device (92; 192) is provided, which keeps the service cage (90, 190) in vertical alignment.

4. System according to claim 3, **characterized in that** the mechanical guide device (92) comprises:
a) a rigidly fastened, horizontally extending guide rail (93);
b) a guide block (94) displaceable on the guide rail (93);
c) a vertical guide (95), which is fastened to the guide block (94) and connected to the service cage (90) and fashioned in such a way that it allows vertical movements of the service cage (90).

5. System according to claim 4, **characterized in that** the vertical guide (95) is a telescopic guide.

6. System according to claim 4, **characterized in that** the vertical guide comprises a guide rod, which extends through the guide block and is guided linearly therein.

7. System according to claim 4, **characterized in that** the vertical guide comprises a guide rod, which extends through the element, which establishes the connection to the service cage, and is guided linearly therein.

8. System according to claim 3, **characterized in that** the guide device (192) comprises a connecting rod (193), which is coupled at one end to the service cage (190) and at the other end to a structure (194), which is rigidly connected to the running gear (107, 108, 109 to 112), such that the connecting rod (193) together with the swivel arm (151) forms a parallelogram guide.

9. System according to claim 2, **characterized in that** a gear unit is provided, which in the mounted state of the service cage establishes a positive coupling between the swivelling motion of the swivel arm and the swivelling motion of the holding device carrying the service cage, such that the service cage upon a swivelling motion of the swivel arm remains vertically aligned.

10. System according to claim 2, **characterized in that** the swivel arm is coupled to the region of the service cage lying above the centre of gravity of the service cage and the service cage is suspended in pendulum fashion from the swivel arm.

11. System according to claim 10, **characterized in that** damping or friction elements are provided for damping the reciprocating motion of the service cage.

## Revendications

1. Installation de traitement, en particulier de peinture par immersion cataphorétique d'objets, en particulier de carrosseries de véhicules, comprenant
a) plusieurs postes de traitement dont au moins un comprend un réservoir de traitement et sur lesquels les objets sont soumis à un traitement ;
b) un dispositif de transport au moyen duquel les objets sont conduits aux et à travers les différents postes de traitement et à cette occasion introduits dans ledit au moins un réservoir de traitement et sortis de celui-ci,
c) le dispositif de transport comprenant au moins un véhicule de transport (5) qui lui-même présente :
ca) un châssis (7, 8, 9 à 12) mobile le long de la course de déplacement des objets (4) ;
cb) au moins un bras pivotant (50, 51) articulé sur le châssis (7, 8, 9 à 12);
cc) un support (61) pour au moins un objet (4) articulé sur le bras pivotant (50, 51);
cd) des entraînements (32, 33, 56, 57, 80, 81) actionnables séparément premièrement pour le mouvement de translation, deuxièmement pour le mouvement de pivotement dudit au moins un bras pivotant (50, 51) et troisièmement pour le support (61);
**caractérisée par le fait**
d) **qu'**une nacelle de service (90 ; 190) permettant le transport d'au moins une personne est fixée au support (61 ; 161) ;
e) **qu'**il est prévu un dispositif au moyen duquel la nacelle de service (90 ; 190) est maintenue en orientation verticale lors d'un mouvement de pivotement dudit au moins un bras pivotant (50, 51 ; 150, 151).

2. Installation selon la revendication 1, **caractérisée par le fait que** la liaison d'entraînement entre le support (61) et l'entraînement indépendant (80, 81) pour le support (61) est débrayable ou détachable.

3. Installation selon la revendication 2, **caractérisée par le fait qu'**il est prévu un dispositif de guidage mécanique (92 ; 192) qui maintient la nacelle de service (90, 190) en orientation verticale.

4. Installation selon la revendication 3, **caractérisée par le fait que** le dispositif de guidage mécanique (92) comprend :
a) un rail de guidage (93) fixé rigidement, s'étendant horizontalement ;
b) un chariot de guidage (94) mobile en translation sur le rail de guidage (93);
c) un guide ou guidage vertical (95) fixé au chariot de guidage (94) et relié à la nacelle de service (90), qui est conçu de manière à autoriser des mouvements verticaux de la nacelle de service (90).

5. Installation selon la revendication 4, **caractérisée par le fait que** le guide vertical (95) est un guide télescopique.

6. Installation selon la revendication 4, **caractérisée par le fait que** le guide vertical comprend une tige de guidage qui s'étend à travers le chariot de guidage et est guidée linéairement dans celui-ci.

7. Installation selon la revendication 4, **caractérisée par le fait que** le guide vertical comprend une tige de guidage qui s'étend à travers l'élément qui établit la liaison avec la nacelle de service et est guidée linéairement dans celui-ci.

8. Installation selon la revendication 3, **caractérisée par le fait que** le dispositif de guidage (192) comprend une tige de liaison (193) qui est articulée à une extrémité sur la nacelle de service (190) et à l'autre extrémité sur une structure (194) qui est connectée rigidement au châssis (107, 108, 109 bis 112) de façon que la tige de liaison (193) forme avec le bras pivotant (151) un guidage par parallélogramme.

9. Installation selon la revendication 2, **caractérisée par le fait qu'**il est prévu une transmission qui, quand la nacelle de service est montée, établit un couplage forcé entre le mouvement de pivotement du bras pivotant et le mouvement de pivotement du support portant la nacelle de service, de façon que la nacelle de service reste orientée verticalement lors d'un mouvement de pivotement du bras pivotant.

10. Installation selon la revendication 2, **caractérisée par le fait que** le bras pivotant est articulé sur la zone de la nacelle de service située au-dessus du centre de gravité de la nacelle de service et que la nacelle de service est suspendue de manière oscillante au bras pivotant.

11. Installation selon la revendication 10, **caractérisée par le fait qu'**il est prévu des organes d'amortissement ou à friction qui amortissent le mouvement oscillant de la nacelle de service.
